# EUROPEAN PATENT APPLICATION

(11) **EP 4 098 688 A1**
(43) Date of publication of application: **07.12.2022**
(21) Application number: 21177209.0
(22) Date of filing: 01.06.2021
(51) Int. Cl.: C08J 11/08, C08L 69/00, C08L 55/02

(54) **EFFICIENT SEPARATION OF POLYCARBONATE FROM MIXED PLASTICS**

(71) Applicant: NEDERLANDSE ORGANISATIE VOOR TOEGEPAST- NATUURWETENSCHAPPELIJK ONDERZOEK TNO, 2595 DA 's-Gravenhage (NL)
(72) Inventor: VAN DER MEER, Johannes, 2595 DA 's-Gravenhage (NL); PRINS, Lucie, 2595 DA 's-Gravenhage (NL); KWAKERNAAT, Lauran, 2595 DA 's-Gravenhage (NL); GEERS, Leonard Ferdinand Gerard, 2595 DA 's-Gravenhage (NL); ROELANDS, Cornelis Petrus Marcus, 2595 DA 's-Gravenhage (NL); VAN DE RUNSTRAAT, Annemieke, 2595 DA 's-Gravenhage (NL)
(74) Representative: V.O.

(57) **Abstract**

The invention is in the field of recycling plastic waste. In particular, the invention is directed to a method to separate polycarbonate and a first-component from plastic waste. In particular, the method according to the present invention may be used to efficiently separate polycarbonate and the first component with high purity and yield. The method is based on nonselective dissolution and selective precipitation.

## Description

The invention is in the field of recycling plastic waste. In particular, the invention is directed to a method to separate polycarbonate and a first-component from plastic waste.

Plastics typically mainly comprise polymers derived from fossil fuel based petrochemicals and due to its negative impact on the environment, alternative raw materials such as bio-based materials or recycling methods are sought after.

Recycling of plastic waste is a highly researched topic and may further aid in the development of a circular economy (*i.e.* a system of closed loops in which renewable sources are used and used materials lose their value as little as possible).

After a product has reached its end-of-life, it is typically considered waste and at this point conventional recycling methods typically commence. The waste may be collected and sorted, wherein the sorting typically first comprises mechanical sorting by type of material (*e.g.* plastics, paper). Further downstream the plastics are sorted by type of polymers, for instance by using infrared spectroscopy to obtain a waste stream and several mono streams. A mono stream ideally comprises one type of polymer or a plurality of similar types of polymers, for instance PET (polyethylene terephthalate), however mono streams typically do not reach a purity above 94%. Furthermore, the majority may end in the waste stream, thereby limiting the yield of the sorting process.

In general, a purity of 94% or lower of the mono streams is not sufficient to be used or to be interchangeable with virgin materials. Accordingly, the mono streams may be further processed by *i.a.* shredding and washing. The quality of the recyclate (*i.e.* the remaining material after the recycling process that may be used for new products) is often still not sufficient for the recyclate to be interchangeable with the virgin polymers. The recyclate may be extruded and new products may be formed thereof, such as benches.

In particular, plastic waste comprising a mixture of polymers, such as blends, are challenging to recycle. For instance, a blend comprising polycarbonate (PC) may be challenging to recycle. Polycarbonate is a thermoplastic polymer that is very resistant to heat, chemicals and impact. It is often used in *i.a.* electronic applications, construction materials, and the automotive industry. To increase the scratch-resistance of polycarbonate, a coating may be applied. Examples of blends comprising PC include PC/acrylonitrile butadiene styrene (ABS) blend and PC/ high impact polystyrene (HIPS) blend. These blends typically occur in waste from electrical or electronic equipment, which is also referred to as e-waste. This stream is particularly hard to recycle, as the manufacturing of new products often demands pure ABS, HIPS or PC (*i.e.* without additives) to make a blend with the desired mechanical properties.

To further improve the recycling process, several methods are available to isolate a polymer from plastic waste.

One method to recover an individual polymer is disclosed in US8492501, where a process to recover polycarbonates from a blend using liquid chromatography is described. However, the polymers in the remaining fraction are difficult to recover.

Another method to individually recover a polymer is based on dissolution and precipitation. A review of this type of solvent-based recycling of plastic waste is given by Zhao et al. (Chemosphere 209, 2018, 707-720). An example thereof is given in US2003/0191202, which discloses a method for separating and recovering target polymers and their additives by dissolving these in a solvent. This solution is placed in a non-aqueous solution, which is miscible with the solvent, to precipitate the target polymer while the additives remain dissolved. A second polymer may be present, that remains dissolved during the precipitation of the target polymer.

A further example is given by Zhao et al. (Waste Management, 69, 2017, 393-399), where a method including the individual separation of polymers present in a mixture by selective dissolution and precipitation is described.

WO2005/100461 discloses the dissolution of plastic using a phase separation agent, followed by precipitation of the plastic using an anti-solvent.

Another example is disclosed in WO2015/076868, wherein a method to recover a polymer is disclosed that comprises contacting a material of a target polymer and a first and second component with a solvent medium to attain a liquid-solid phase separation. The target polymer and second component remain in the solid material. This solid material is subsequently contacted with a solvent medium to further attain liquid-solid phase separation and therefrom the polymer may be recovered.

A further example is disclosed by Chandrasekaran et al. (ACS Sustainable Chem. Eng. 2018, 6, 4, 4594-4602), where *i.a.* a mixture of polycarbonate and polyamide was dissolved in dichloromethane or N-methyl-2-pyrrolidone, followed by precipitation of polycarbonate using an anti-solvent.

The methods typically do not provide sufficient yield and purity for polymer blends. A method to efficiently separate polymers from plastic waste and in particular from plastic waste comprising polymer blends with high purity and yield is therefore sought after.

It is an object of the present invention to provide another and preferably improved method for at least partially separating polycarbonate and a first component from plastic waste that overcomes at least part of the above-mentioned drawbacks. In particular, the method according to the present invention may be used to efficiently separate polycarbonate and the first component with high purity and yield. The present inventors surprisingly found that a method based on nonselective dissolution and selective precipitation allows for such high purities.

Thus, in a first aspect the invention is directed to a method for at least partially separating polycarbonate and a first component from plastic waste, wherein said method comprises:
- dissolving the polycarbonate and the first component in a solvent to obtain a polymer solution;
- adding a weak anti-solvent to the polymer solution to precipitate the polycarbonate and obtain a polycarbonate precipitate;
- separating the polycarbonate precipitate from the polymer solution to obtain a polycarbonate fraction and a first-component rich solution;
- adding a strong anti-solvent to the first-component rich solution to precipitate the first component and obtain a first component precipitate.

Although the method according to the present invention requires multiple precipitation steps, the method provides a simple technique that does not require the use of *e.g.* a separation column with solids that need to be recycled and purified.

The polycarbonate and the first component are at least partially separated from plastic waste, which is typically provided as a mono stream. The plastic waste may be subjected to a pre-treatment step before dissolving the polycarbonate and the first component in the solvent. This pre-treatment step may comprise *i.a.* further shredding and/or the removal of color impurities.

It is preferred that the plastic waste comprises e-waste and/or automotive scrap parts, preferably e-waste. E-waste is a general term used to describe all electrical or electronic waste. It includes categories such as, but not limited to, household appliances (*e.g.* microwave), consumer electronics (*e.g.* televisions) and lamps (*e.g.* LEDs). More preferably, the method of the present invention is particularly suitable for e-waste according to the WEEE-directive of the European Union (2012/19/EU).

Further, the plastic waste may comprise a non-soluble fraction that is preferably removed before the addition of the weak-anti solvent. The non-soluble fraction may comprise insoluble polymers, minerals or small metal particles. The non-soluble fraction may be removed by any means known in the art, such as filtration. Preferably, the non-soluble fraction is removed by filtration using a prepared filter bed comprising a filter paper and a filter aid. Such a filter is typically sufficient to remove all of the non-soluble fraction and allows for the polycarbonate and/or first component to remain in the filtrate. Removal of the impurities before the dissolution typically increases the purity of the precipitated polycarbonate and/or first component.

The first component preferably comprises a polymer, more preferably the first component comprises a polymer selected from the group consisting of acrylonitrile butadiene styrene (ABS), high impact polystyrene (HIPS) and styrene-acrylonitrile (SAN), in particular it is preferred that the first-component comprises ABS or HIPS, more preferably the first-component is ABS. These polymers are often present in the preferred e-waste and/or automotive scrap parts.

ABS is frequently used for the housing of many appliances and for the automotive industry. ABS a thermoplastic polymer that may be manufactured by emulsion polymerization or mass polymerization, forming SAN copolymer chains grafted on a polybutadiene backbone (E-ABS) or discrete rubber polybutadiene particles with part of the SAN grafted on the particles and another part of the SAN occluded in the particles (M-ABS), respectively. The proportions of styrene, acrylonitrile and polybutadiene can be varied depending on the desired properties. If ABS is dissolved, the SAN copolymer typically separates from the polybutadiene. Accordingly, if ABS is dissolved, the SAN may be fully dissolved while the small polybutadiene particles may be dispersed in the solvent. In the content of the present invention, dissolution of ABS is also used to describe dissolved SAN with dispersed polybutadiene particles in the solvent.

In particular, it is preferred that the plastic waste comprises a blend of the polycarbonate and the first component.

Polymer blends can be broadly classified in three groups, being immiscible polymer blends, compatible polymer blends and miscible polymer blends. Immiscible polymer blends may also be referred to as heterogeneous polymer blends. The polymers in these blends typically form separate phases and their corresponding individual glass transition temperatures may be observed. Compatible polymer blends are typically immiscible polymer blends that have macroscopically uniform physical properties due to sufficiently strong interactions between the polymers. Miscible polymer blends may also be considered homogeneous polymer blends and typically have a single-phase structure for which one glass-transition temperature may be observed.

This invention is particularly suitable for miscible polymer blends. In miscible blends, the first polymer of the blend is typically only fully accessible to be dissolved if the second polymer of the blend is also dissolved and fully accessible to the solvent. Further, the method according to the present invention may be suitable for inaccessible blends. This is a term to describe a blend that is at least partially unreachable by a solvent, for instance due to an applied coating.

The invention is particularly suitable as the dissolution of the polycarbonate and the first component may be considered nonselective. Nonselective is used herein to describe that both the polycarbonate and first component are fully dissolved. The nonselective dissolution may accordingly allow for the disruption of the cohesion and noncovalent bonds that hold the polymers together in a blend. This further typically provides a higher yield and purity as all components of the polymer blend are accessible and disassociated such that the polycarbonate and first component are present in solution.

The polycarbonate and first component are dissolved in a solvent, which may be performed at an elevated temperature (*i.e.* above 20 °C). A higher temperature typically accelerates the dissolution of the polyolefins.

During at least part of the method it may also be preferred to provide a continuous circulation of the polymer solution, for instance by stirring. This is typically preferred during dissolution as it may enhance the dissolution.

The solvent is selected such that the polycarbonate and first component are soluble therein. Typical solvents include dichloromethane (DCM), cycloketones comprising a C₄ or larger ring (*i.e.* four or more carbon atoms), methyl isobutyl ketone (MIBK), tetrahydrofuran (THF), dimethylformamide (DMF), dimethylacetamide (DMAc), chloroform, benzaldehyde, aniline, 1,4-dioxane, ethylene chloride, N-methyl-2-pyrrolidone.

The solvents are further preferably allowed under the Registration, Evaluation, Authorization and Restriction of Chemicals (REACH) regulations, which is a regulation of the European Union adapted to improve the protection of human health and the environment from the risks of chemicals.

More specifically, the solvent is preferably selected from the group consisting of cyclopentanone, cyclohexanone and a combination thereof. It was surprisingly found that these solvents are particularly suitable to dissolve PC/ABS and PC/HIPS blends and may thus allow for separation with high purity and yields.

In order to selectively precipitate polycarbonate from the polymer solution to obtain polycarbonate precipitate, a weak anti-solvent is added. The term weak anti-solvent is herein used to indicate that it is an anti-solvent that in principle only allows polycarbonate to precipitate out of the polymer solution. It is well-known in the art that the addition of an anti-solvent can enhance the precipitation of a solute. The anti-solvent typically decreases the solubility of the solute and thus the solute is driven towards precipitating out of the polymer solution. Examples of suitable weak anti-solvents are lower ketones such as acetone, MIBK and methyl ethyl ketone (MEK).

After the polycarbonate has precipitated, the polycarbonate precipitate may be separated from the remainder of the polymer solution to obtain a polycarbonate-rich fraction and a first-component rich solution. The present inventors surprisingly found that the quality of the first-component is not affected by the precipitation of the polycarbonate. For instance, when ABS or HIPS is the first component, the inventors found that during the precipitation of polycarbonate no or at most a minimal amount of polybutadiene is encapsulated in the polycarbonate precipitate. The polycarbonate precipitate may be filtered out of the polymer solution, preferably using a filter comprising a filter paper and a filter aid. In case ABS is the first component the fine filter is selected such that it allows the dispersed polybutadiene particles to pass through and remain in the filtrate.

The purity of the polycarbonate rich fraction may be at least 90%, preferably at least 95% polycarbonate, based on the solute content of the fraction. The first-component rich solution may have a purity of at least 85% based on the solute content of the solution. These purities are generally considered sufficient for further processing into new materials and articles. The purity is preferably sufficiently high to be interchangeable with virgin materials.

The polycarbonate rich fraction typically comprises the polycarbonate precipitate such as flakes and may be considered a solid or slurry. The polycarbonate is preferably recovered from the polycarbonate rich fraction, for instance by substantially removing the solvent and the weak anti-solvent. The solvent and weak anti-solvent may be removed down to approximately 1-2% based on the total weight of the polycarbonate. Removal thereof can be achieved by any means known in the art, such as evaporation or lyophilization. Additionally, the recovered polycarbonate may be processed further by for instance vacuum kneading, typically rendering the solvent and weak anti-solvent content to 0.1% or lower.

To the first-component rich solution a strong anti-solvent is added. Strong anti-solvent is herein used to describe an anti-solvent that is capable of enhancing the precipitation of the first component. The selection of the strong anti-solvent may depend on the first component. Typically the strong anti-solvent comprises lower ketones such as acetone and/or lower alcohols such as methanol, ethanol and/or propanol. Preferably, the strong anti-solvent comprises methanol and/or acetone.

It may be appreciated that the solvent, weak and/or strong anti-solvent can be identical. The function of the particular fluid (*i.e.* solvent, anti-solvents) may depend *i.a.* on the type of polymers to be separated from the plastic waste and the specific combination of used fluids. The specific combination of *e.g.* a solvent and a weak anti-solvent may alter the environment in such a manner that the affinity for the solution and the solubility of the first component changes. Adding an amount of strong anti-solvent, e.g. an identical fluid to the weak anti-solvent, may then cause the first component to precipitate, although this may not be the case while adding the first amount of the fluid as the weak anti-solvent. Accordingly, the function of the fluid may also depend on the amount of fluid used. A strong anti-solvent may thus function as a weak anti-solvent if dosed in a smaller amount.

The method according to the present invention may further comprise separating the first component precipitate from the first-component rich solution to obtain a first-component rich fraction and a residue solution. This residue solution may comprise the solvent and the strong anti-solvent. Further the residue solution may comprise the weak anti-solvent. Alternatively, the weak anti-solvent may be at least substantially removed before the addition of the strong anti-solvent. Removal of the weak anti-solvent before adding the strong anti-solvent may be favorable as this typically entails the separation of two liquids (*i.e.* the solvent and weak anti-solvent), which is a relatively minimal complex mixture.

Further, the method according to the present invention may comprise recovering the first component from the first-component rich fraction. This may for instance be performed by substantially removing the solvent, strong anti-solvent and optionally the weak anti-solvent, preferably up to purities exceeding 95% based on the total weight of the first component.

Additionally, it may be preferred to separate the solvent, strong anti-solvent and/or weak anti-solvent from the residue solution, polycarbonate rich fraction and/or first-component rich fraction. This separation is preferably to the extent that each of the solvent, weak anti-solvent and/or strong anti-solvent may be recovered as individual streams that are suitable to be reused in the method. The separation and recovery may for instance be by distillation. In other words, the solvent may be recovered with a sufficiently high purity in order to be reused as solvent. In the recovered solvent, some impurities from *e.g.* anti-solvents are allowed, however the amount thereof should not compromise its function as solvent. Similarly, the weak anti-solvent and/or strong anti-solvents are each recovered in such high purities that these may fulfil the function as anti-solvent for a second or further cycle of the method according to the present invention. The method is accordingly preferably carried out in a closed loop system, that hardly requires the addition of additional solvent, weak anti-solvent and/or strong anti-solvent.

In a most preferred embodiment the first component is ABS which is present in a blend with the polycarbonate. In this most preferred embodiment the solvent comprises cyclopentanone, the weak anti-solvent comprises acetone and the strong anti-solvent comprises methanol. This typically allows for selective precipitation and recovering of PC and ABS with high purities and yields.

For the purpose of clarity and a concise description features are described herein as part of the same or separate embodiments, however, it will be appreciated that the scope of the invention may include embodiments having combinations of all or some of the features described.

The present invention can be illustrated by the following nonlimiting examples.

### Example 1

215 g of a blend of 72 wt% PC, 24 wt% ABS and 4 wt% impurities is consecutively washed with water and acetone to remove surface impurities. After drying it is dissolved in 2 L of cyclopentanone at 100 °C for 2 hours and filtered over a paper filter with filter aid. The solution is mixed with 2 volumes of acetone per volume of solution and left to precipitate for several hours. The precipitate is filtered off, washed with acetone, and dried in a vacuum oven to yield 125 g of polycarbonate with a purity of over 95%. The most prominent contaminant is solvent, which can be removed in a subsequent process step (*e.g.* in a vacuum kneader). The solution (∼6L) is evaporated to yield 24 grams of solid material, primarily ABS. However, this solution could be reprocessed with a strong anti-solvent to purify the ABS further.

## Claims

1. Method for at least partially separating polycarbonate and a first component from plastic waste, wherein said method comprises:
- dissolving the polycarbonate and the first component in a solvent to obtain a polymer solution;
- adding a weak anti-solvent to the polymer solution to precipitate the polycarbonate and obtain a polycarbonate precipitate;
- separating the polycarbonate precipitate from the polymer solution to obtain a polycarbonate rich fraction and a first-component rich solution;
- adding a strong anti-solvent to the first-component rich solution to precipitate the first component and obtain a first component precipitate.

2. Method according to the previous claim, wherein the first component comprises a polymer, preferably a polymer selected from the group consisting of acrylonitrile butadiene styrene (ABS), high impact polystyrene (HIPS) and styrene-acrylonitrile (SAN), more preferably the first component comprises ABS or HIPS, most preferably the first component is ABS.

3. Method according to any of the previous claims, wherein the plastic waste comprises a blend, preferably a miscible polymer blend of the polycarbonate and first component.

4. Method according to any of the previous claims wherein the solvent is selected from the group consisting of dichloromethane (DCM), cycloketones comprising a C₄ or larger ring (*i.e.* four or more carbon atoms), methyl isobutyl ketone (MIBK), tetrahydrofuran (THF), dimethylformamide (DMF), dimethylacetamide (DMAc), chloroform, benzaldehyde, aniline, 1,4-dioxane, ethylene chloride, N-methyl-2-pyrrolidone, preferably the solvent is selected from the group consisting of cyclopentanone, cyclohexanone and combinations thereof.

5. Method according to any of the previous claims, wherein the weak anti-solvent is selected from the group consisting of lower ketones such as acetone, MIBK, MEK and combinations thereof and/or wherein the strong anti-solvent is selected from the group consisting of methanol, ethanol, propanol, acetone and combinations thereof.

6. Method according to any of the previous claims, wherein said plastic waste further comprises a non-soluble fraction and wherein said method further comprises removing said non-soluble fraction from the polymer solution before adding the weak anti-solvent.

7. Method according to any of the previous claims, wherein separating the polycarbonate precipitate from the polymer solution comprises filtration, preferably filtration with a prepared filter bed comprising a filter paper and a filter aid.

8. Method according to any of the previous claims, wherein the polycarbonate rich fraction has a purity of at least 90%, preferably at least 95% based on the solute content of the fraction and/or wherein the first-component rich solution has a purity of at least 80%, preferably at least 85% based on the solute content of the solution.

9. Method according to any of the previous claims, further comprising substantially removing the weak anti-solvent from the first-component rich solution before adding the strong anti-solvent.

10. Method according to any of the previous claims, further comprising recovering the polycarbonate from the polycarbonate rich fraction, preferably by substantially removing the solvent and weak anti-solvent.

11. Method according to any of the previous claims, further comprising separating the first component precipitate from the first-component rich solution to obtain a first-component rich fraction and a residue solution.

12. Method according to the previous claim, wherein said method further comprises recovering the first component from the first-component rich fraction, preferably by substantially removing the solvent, strong anti-solvent and optionally the weak anti-solvent.

13. Method according to any of the previous claims, further comprising at least partially recovering the solvent, weak anti-solvent and/or the strong anti-solvent as individual streams suitable to be reused in the method.

14. Method according to any of the previous claims, wherein the plastic waste comprises e-waste and/or automotive scrap parts, preferably the plastic waste comprises e-waste, more preferably e-waste according to the WEEE-directive of the European Union (2012/19/EU).

15. Method according to any of the previous claims, which method is carried out in a closed loop system.
